# EUROPEAN PATENT SPECIFICATION

(11) **EP 2 725 915 B1**
(45) Date of publication and mention of the grant of the patent: **22.08.2018**
(21) Application number: 12804660.4
(22) Date of filing: 28.06.2012
(51) Int. Cl.: A23B 7/154, A23B 7/152

(54) **METHOD OF HANDLING MANGOES**
VERFAHREN ZUR HANDHABUNG VON MANGOS
PROCÉDÉ DE MANIPULATION DE MANGUES

(30) Priority: 29.06.2011 US 201161502530 P
(43) Date of publication of application: 07.05.2014
(73) Proprietor: AgroFresh Inc., Philadelphia, PA 19106 (US)
(72) Inventor: MCCASKEY, Evan Franklin, Ambler, Pennsylvania 19002 (US); FOBES, Jon Frederick, Lower Gwynedd, Pennsylvania 19002 (US); MIR, Nazir, North Brunswick, New Jersey 08902 (US); UREÑA-PADILLA, Alvaro R., Tes Rios Cartago 30103 (CR)
(74) Representative: HGF Limited
(86) International application number: PCT/US2012/044623
(87) International publication number: WO 2013/003578

(56) References cited:
- EP-A1- 1 464 229
- JP-A- 2010 018 332
- US-A- 5 891 376
- US-A1- 2005 288 189
- US-A1- 2006 154 822
- US-A1- 2006 154 822
- US-B1- 6 190 710
- JIANG Y ET AL: "Effects of 1-methylcyclopropene alone and in combination with polyethylene bags on the postharvest life of mango fruit", ANNALS OF APPLIED BIOLOGY, ASSOCIATION OF APPLIED BIOLOGISTS, WELLESBOURNE, GB, vol. 137, 1 January 2000 (2000-01-01), pages 321-327, XP002633563, ISSN: 0003-4746
- VILAS-BOAS ET AL: "Effect of 1-methylcyclopropene (1-MCP) on softening of fresh-cut kiwifruit, mango and persimmon slices", POSTHARVEST BIOLOGY AND TECHNOLOGY, ELSEVIER, NL, vol. 43, no. 2, 15 February 2007 (2007-02-15), pages 238-244, XP005890979, ISSN: 0925-5214, DOI: 10.1016/J.POSTHARVBIO.2006.09.010
- D C Slaughter: "Methods for management of ripening in mango", Biological and Agricultural Engineering University of California, Davis, 1 January 2009 (2009-01-01), pages 1-10, XP055066073, Retrieved from the Internet: URL:http://www.mango.org/media/55737/metho ds_for_management_of_ripening.pdf [retrieved on 2013-06-11]
- BAOGANG WANG ET AL: "Effects of 1-MCP and exogenous ethylene on fruit ripening and antioxidants in stored mango", PLANT GROWTH REGULATION, KLUWER ACADEMIC PUBLISHERS, DO, vol. 57, no. 2, 14 October 2008 (2008-10-14), pages 185-192, XP019676347, ISSN: 1573-5087
- KHAN AHMAD SATTAR ET AL: "1-Methylcyclopropene application and modified atmosphere packaging affect ethylene biosynthesis, fruit softening, and quality of 'Tegan blue' Japanese plum during cold storage", JOURNAL OF THE AMERICAN SOCIETY FOR HORTICULTURAL SCIENCE, AMERICAN SOCIETY FOR HORTICULTURAL SCIENCE, ALEXANDRIA, VA, US, vol. 133, no. 2, 1 March 2008 (2008-03-01) , pages 290-299, XP009146567, ISSN: 0003-1062
- D.C.SLAUGHTER: 'Methods for Management of Ripening in Mango' BIOLOGICAL AND AGRICULTURAL ENGINEERING UNIVERSITY OF CALIFORNIA, DAVIS January 2009, pages 1 - 10, XP055066073

## Description

### PRIORITY CLAIM

This application claims the benefit of the filing date of United States Provisional Patent Application Serial No. 61/502,530, filed June 29, 2011, for "Method of Handling Mangoes."

### BACKGROUND

Mangoes are generally harvested when they are physiologically mature. This means that they can ripen and develop the normal flavor and taste even after detaching from the tree. At physiological maturity, the fruits have fully developed cheeks, skin color has changed from dark-green to light-green and may be yellow in some varieties. Some varieties develop red color, but that is not considered as an index of maturity. It is common to harvest and then ship mangoes while the peels are green. Long-distance shipment is often performed at low temperature (for example, at 14°C). Mangoes are considered to ripen very slowly during such shipment, during which the Mangoes normally remain green.

Once the mangoes have reached a location near where they will be sold, they may be allowed to ripen at either room temperature or a reduced temperature. They may optionally be placed in an enclosed volume and exposed to ethylene gas, which hastens ripening. As the mangoes ripen during a normal ripening process, the peels gradually turn red. Eventually the mangoes become undesirably over-ripe.

It is desirable to maintain mangoes for as long as possible in a desirable condition (i.e., a condition in which they are desirable to consumers). Mangoes in that condition are ripe but have not developed undesirable post-ripening characteristics, such as a pulp that has turned undesirably soft. One commonly used method to evaluate the condition of the mangoes is through determining the pulp firmness. A common pulp firmness determination method is described below in the Examples.

The use of modified atmosphere packaging (MAP) is known to extend the desirable condition and reduce undesirable post-ripening characteristics of a number of fruits, and other agricultural commodities. Such packaging may involve the use of non-perforated or perforated polymeric films. The use of 1-methylcyclopropene (MCP or 1-MCP) has also been known to extend the optimum ripening period for such commodities. There are a few references to combinations of MAP and MCP for such uses. See, for example, R.M. Basel, et. al., in "Long Shelf Life Banana Storage Using MAP Storage Coupled With Postharvest MCP Treatment" (Institute of Food Technologists, 2002 Annual Meeting and Food Expo, available at http://ift.confex.com/ift/2002/techprogram/paper _13343 .htm), which describes the combined use of MAP and MCP. The methods of Basel et al., postpone the onset of ripening of bananas and, once ripening begins, extend the ripening process.

Jiang Y. et al., Annals of Applied Biology, Association of Applied Biologists, vol. 137, (2000), p. 321-327 relates to the effects of 1-methylcyclopropene alone and in combination with polyethylene bags on the postharvest life of mango fruit.

Vilas-Boas *et al.* relates to the effect of 1-methylcyclopropene (1-MCP) on softening of fresh-cut kiwifruit, mango and persimmon slices.

EP 1464229 relates to a method of suppressing deterioration of the quality of an agricultural product, comprising a step of contact-treating an agricultural product under reduced pressure conditions with a cyclopropene compound.

D.C. Slaughter, Biological and Agricultural Engineering University of California, Davis, 1 January 2009, pp 1 - 10 relates to methods for management of ripening in mango,

Baogang Wang et al., Plant Growth Regulation, vol. 57, no. 2, pp 185-192 relates to the effects of 1-MCP and exogenous ethylene on fruit ripening and antioxidants in stored mango.

It is desired to provide methods in which mangoes ripen sufficiently to become desirable for retail sale and/or consumption and in which mangoes remain in such desirable condition for a longer time than in previous methods. It is particularly desired to find a method of storing and handling mangoes that allows the mangoes to remain for a longer time in condition that is desirable for eating.

### STATEMENT OF THE INVENTION:

In one aspect of the present invention, there is provided a method of handling mangoes, comprising:
exposing the mangoes to an atmosphere that contains one or more cyclopropene compounds; and
containing the mangoes in a modified-atmosphere package,
wherein the modified atmosphere package comprises a polymeric film that is perforated.

This method contemplates exposing the mangoes to the cyclopropene compound either before containing the mangoes in the modified-atmosphere package, while the mangoes are contained in the modified-atmosphere package, or after containing the mangoes in the modified-atmosphere package.

### DETAILED DESCRIPTION:

As used herein, "mango" or "mangoes" refers to any member of the genus Mangifera.

When a compound is described herein as being present as a gas in an atmosphere at a certain concentration using the unit "ppm," the concentration is given as parts by volume of that compound per million parts by volume of the atmosphere. Similarly, "ppb" (which is equivalent to microliters per liter) denotes parts by volume of that compound per billion parts by volume of the atmosphere.

As used herein, a "polymeric film" is an object made of polymer that is much smaller in one dimension (the "thickness") than in the other two dimensions and that has a relatively uniform thickness. Polymeric film typically has thickness of 1 mm or less.

The present invention involves the use of one or more cyclopropene compounds. As used herein a cyclopropene compound is any compound with the formula 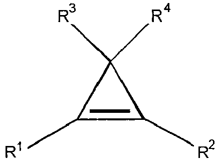 where each R¹, R², R³ and R⁴ is independently selected from the group consisting of H and a chemical group of the formula:

-(L)ₙ-Z

where n is an integer from 0 to 12. Each L is a bivalent radical. Suitable L groups include, for example, radicals containing one or more atoms selected from H, B, C, N, O, P, S, Si, or mixtures thereof. The atoms within an L group may be connected to each other by single bonds, double bonds, triple bonds, or mixtures thereof. Each L group may be linear, branched, cyclic, or a combination thereof. In any one R group (i.e., any one of R¹, R², R³ and R⁴) the total number of heteroatoms (i.e., atoms that are neither H nor C) is from 0 to 6.

Independently, in any one R group the total number of non-hydrogen atoms is 50 or less.

Each Z is a monovalent radical. Each Z is independently selected from the group consisting of hydrogen, halo, cyano, nitro, nitroso, azido, chlorate, bromate, iodate, isocyanato, isocyanido, isothiocyanato, pentafluorothio, and a chemical group G, wherein G is a 3 to 14 membered ring system.

The R¹, R², R³ and R⁴ groups are independently selected from the suitable groups. The R¹, R², R³ and R⁴ groups may be the same as each other, or any number of them may be different from the others. Groups that are suitable for use as one or more of R¹, R², R³ and R⁴ may be connected directly to the cyclopropene ring or may be connected to the cyclopropene ring through an intervening group such as, for example, a heteroatom-containing group.

As used herein, a chemical group of interest is said to be "substituted" if one or more hydrogen atoms of the chemical group of interest is replaced by a substituent. Suitable substituents include, for example, alkyl, alkenyl, acetylamino, alkoxy, alkoxyalkoxy, alkoxycarbonyl, alkoxyimino, carboxy, halo, haloalkoxy, hydroxy, alkylsulfonyl, alkylthio, trialkylsilyl, dialkylamino, and combinations thereof.

Among the suitable R¹, R², R³ and R⁴ groups are, for example, substituted and unsubstituted versions of any one of the following groups: aliphatic, aliphatic-oxy, alkylcarbonyl, alkylphosphonato, alkylphosphato, alkylamino, alkylsulfonyl, alkylcarboxyl, alkylaminosulfonyl, cycloalkylsulfonyl, cycloalkylamino, heterocyclyl (i.e., aromatic or non-aromatic cyclic groups with at least one heteroatom in the ring), aryl, hydrogen, fluoro, chloro, bromo, iodo, cyano, nitro, nitroso, azido, chlorato, bromato, iodato, isocyanato, isocyanido, isothiocyanato, pentafluorothio; acetoxy, carboethoxy, cyanato, nitrato, nitrito, perchlorato, allenyl; butylmercapto, diethylphosphonato, dimethylphenylsilyl, isoquinolyl, mercapto, naphthyl, phenoxy, phenyl, piperidino, pyridyl, quinolyl, triethylsilyl, and trimethylsilyl.

Among the suitable R¹, R², R³ and R⁴ groups are those that contain one or more ionizable substituent groups such as, for example, carboxy, sulfonyloxy, amino, and amine groups. Such ionizable groups may be in non-ionized form or in salt form. Salt forms may include, for example, sodium, potassium, lithium, and ammonium or amine salts.

Also contemplated are embodiments in which R³ and R⁴ are combined into a single group, which is attached to the number 3 carbon atom of the cyclopropene ring by a double bond. Some of such compounds are described in US Patent Publication 2005/0288189.

In preferred embodiments, one or more cyclopropenes are used in which one or more of R¹, R², R³ and R⁴ is hydrogen. In more preferred embodiments, each of R¹, R², R³ and R⁴ is hydrogen or methyl. In more preferred embodiments, R¹ is (C1-C4) alkyl and each of R², R³, and R⁴ is hydrogen. In more preferred embodiments, R¹ is methyl and each of R², R³, and R⁴ is hydrogen, and the cyclopropene compound is known herein as "MCP" or "1-MCP."

In preferred embodiments, a cyclopropene compound is used that has boiling point at one atmosphere pressure of 50°C or lower; or 25°C or lower; or 15°C or lower. Independently, in preferred embodiments, a cyclopropene compound is used that has boiling point at one atmosphere pressure of -100°C or higher; -50°C or higher; or 25°C or higher; or 0°C or higher.

As used herein, an "ethylene-active" compound is a compound that is ethylene or is an ethylene release agent or is a compound with high ethylene activity.

As used herein, "modified-atmosphere packaging" or "modified-atmosphere package" (collectively "MAP") is an enclosure that alters the gaseous atmosphere inside the enclosure from normal atmospheric composition when respiring produce is contained inside the enclosure. MAP is an enclosure in the sense that it is a package that may be lifted and transported with the produce contained within it. MAP may or may not allow exchange of gas with the ambient atmosphere outside the MAP. MAP may or may not be permeable to diffusion of any particular gas, independent of its permeability or non-permeability to any other gas.

As used herein, a "monomer" is a compound that has one or more carbon-carbon double bond that is capable of participating in a polymerization reaction. As used herein, an "olefin monomer" is a monomer, the molecules of which contain only atoms of carbon and hydrogen. As used herein, "polar monomer" is a monomer, the molecules of which contain one or more polar group. Polar groups include, for example, hydroxyl, thiol, carbonyl, carbon-sulfur double bond, carboxyl, sulfonic acid, ester linkages, other polar groups, and combinations thereof.

One embodiment of the method of the present invention involves optionally contacting mangoes with one or more ethylene-active compounds. Such ethylene-active compounds include ethylene release agents such as, for example, 2-chloroethylphosphonic acid (ethephon), abscisic acid, and other compounds that act in a similar way to affect abscission. Suitable compounds with high ethylene activity also include, for example, propylene, vinyl chloride, carbon monoxide, acetylene, 1-butene, and other compounds with high ethylene activity. In preferred embodiments, exposure to ethylene-active compounds is performed using ethylene.

The temperature for performing exposure of mangoes to ethylene-active compounds is 10°C or higher; preferably 13°C higher; more preferably 14°C or higher. The preferred temperature for performing exposure to ethylene-active compounds is 22°C or lower.

Exposure of mangoes to ethylene-active compounds may be performed by any method. For example, mangoes may be in an atmosphere that contains molecules, in gaseous form, of one or more ethylene-active compounds. Gaseous ethylene-active compounds may be introduced into the atmosphere surrounding the mangoes by any method. For example, gaseous ethylene-active compounds may be released into the atmosphere in such close proximity to mangoes that the ethylene-active compound contacts the mangoes before the ethylene-active compound diffuses far away from the mangoes. For another example, the mangoes may be in an enclosure (i.e., and airtight container enclosing a volume of atmosphere), and gaseous ethylene-active compound may be introduced into the enclosure.

In some embodiments in which the gaseous ethylene-active compound contacts the mangoes, the mangoes are inside a permeable surrounding device, and the ethylene-active compound is introduced into the atmosphere outside the permeable surrounding device. In such embodiments, the permeable surrounding device encloses one or more mangoes and allows some contact between the ethylene-active compound and the mangoes, for example by allowing some ethylene-active compound to diffuse through the permeable surrounding device or through holes in the permeable surrounding device or a combination thereof. Such a permeable surrounding device may or may not also qualify as an MAP as defined herein.

Among embodiments in which gaseous ethylene-active compound is introduced into an enclosure, the introduction may be performed by any method. For example, the ethylene-active compound may be created in a chemical reaction and vented to the enclosure. For another example, ethylene-active compound may be kept in a container such as a compressed-gas tank and released from that container into the enclosure.

Preferred are embodiments in which the gaseous ethylene-active compound is introduced into an enclosure that also contains mangoes. The preferred concentration of ethylene-active compound in the atmosphere inside the enclosure is 20 ppm or higher; more preferably 50 ppm or higher; more preferably 75 ppm or higher. The preferred concentration of ethylene-active compound in the atmosphere inside the enclosure is 1,000 ppm or less; or 500 ppm or less; or 300 ppm or less; or 100 ppm or less.

The preferred duration of the exposure of mangoes to an atmosphere that contains ethylene-active compound is 8 hours or more; more preferably 12 hours or more. The preferred duration of the exposure of mangoes to an atmosphere that contains ethylene-active compound is 48 hours or less; more preferably 36 hours or less; more preferably 24 hours or less.

Mangoes may be subjected to a ripening cycle, in which the mangoes are stored in a normal atmosphere, that is, ambient room atmosphere, and at ambient room temperature; preferably 20 to 25°C. In one embodiment, the mangoes are subjected to a ripening cycle in which the mangoes are stored in a normal atmosphere at 20°C or lower for one day or more subsequent to the end of exposure of the mangoes to an atmosphere that contains the ethylene-active compound. In another embodiment, mangoes are exposed to an atmosphere containing ethylene-active compound for 12-24 hours at 10°C to 20°C; mangoes are then kept in a normal atmosphere at the same temperature or room temperature for 20-28 hours; and mangoes are then stored in a normal atmosphere at 10°C to 20°C or room temperature for a period of 1 to 6 days.

The method of the present invention involves contacting mangoes with one or more cyclopropene compounds. Such contacting may be performed by any method. For example, mangoes may be in an atmosphere that contains molecules, in gaseous form, of one or more cyclopropene compound. Gaseous cyclopropene compound may be introduced into the atmosphere surrounding the mangoes by any method. For example, gaseous cyclopropene compound may be released into the atmosphere in such close proximity to mangoes that the cyclopropene compound contacts the mangoes before the cyclopropene diffuses far away from the mangoes. For another example, the mangoes may be in an enclosure (i.e., and airtight container enclosing a volume of atmosphere), and gaseous cyclopropene compound may be introduced into the enclosure. The mangoes may also be contacted with liquid or solid cyclopropene compounds by any method such as, for example, spraying, dusting, dipping, or dissolving or suspending the cyclopropene in a solvent and then contacting the mangoes with the dissolved or suspended cyclopropene compound.

In some embodiments in which gaseous cyclopropene compounds contact the mangoes, the mangoes are inside a permeable surrounding device, and the cyclopropene compound is introduced into the atmosphere outside the permeable surrounding device. In such embodiments, the permeable surrounding device encloses one or more mangoes and allows some contact between the cyclopropene compound and the mangoes, for example by allowing some cyclopropene compound to diffuse through the permeable surrounding device or through holes in the permeable surrounding device or a combination thereof. Such a permeable surrounding device may or may not also qualify as an MAP as defined herein.

Among embodiments in which gaseous cyclopropene compound is introduced into an enclosure, the introduction may be performed by any method. For example, the cyclopropene compound may be created in a chemical reaction and vented to the enclosure. For another example, cyclopropene compound may be kept in a container and released from that container into the enclosure. For another example, the cyclopropene compound may be contained in a powder or pellets or other solid form that contains encapsulated complex of the cyclopropene compound in a molecular encapsulation agent. Such a complex is known herein as a "cyclopropene encapsulated complex."

In embodiments in which a molecular encapsulation agent is used, suitable molecular encapsulation agents include, for example, organic and inorganic molecular encapsulating agents. Preferred are organic molecular encapsulation agents. Preferred organic encapsulation agents include, for example, substituted cyclodextrins, unsubstituted cyclodextrins, and crown ethers. Suitable inorganic molecular encapsulation agents include, for example, zeolites. Mixtures of suitable molecular encapsulation agents are also suitable. In preferred embodiments of the invention, the encapsulation agent is alpha cyclodextrin, beta cyclodextrin, gamma cyclodextrin, or a mixture thereof. In some embodiments of the invention, particularly when the cyclopropene compound is 1-methylcyclopropene, the preferred encapsulation agent is alpha cyclodextrin. The preferred encapsulation agent will vary depending upon the structure of the cyclodextrin compound or compounds being used. Any cyclodextrin or mixture of cyclodextrins, cyclodextrin polymers, modified cyclodextrins, or mixtures thereof can also be utilized pursuant to the present invention.

The amount of molecular encapsulating agent can usefully be characterized by the ratio of moles of molecular encapsulating agent to moles of cyclopropene compound. In preferred embodiments, the ratio of moles of molecular encapsulating agent to moles of cyclopropene compound is 0.3:1 or higher; more preferably 0.9:1 or higher; more preferably 0.92:1 or higher; more preferably 0.95:1 or higher. Independently, in preferred embodiments, the ratio of moles of molecular encapsulating agent to moles of cyclopropene compound is 2:1 or lower; more preferably 1.5:1 or lower. In more preferred embodiments, the ratio of moles of molecular encapsulating agent to moles of cyclopropene compound is 0.95:1 to 1.5:1.

In some embodiments, a cyclopropene compound is introduced into an enclosure that contains mangoes by placing the cyclopropene encapsulation complex into the enclosure and then contacting the cyclopropene encapsulation complex with a release agent. A release agent is a compound that, when it contacts the cyclopropene encapsulation complex, promotes the release of the cyclopropene compound into the atmosphere. In some embodiments, water (or a liquid that contains 50% or more water by weight, based on the weight of the liquid) is an effective release agent.

In a preferred embodiment, a solid material containing the cyclopropene encapsulation complex is placed into an enclosure that contains mangoes, and water is brought into contact with that solid material. Contact with the water causes release of the cyclopropene into the atmosphere of the enclosure. For example, the solid material may be in the form of tablets that contain, optionally among other ingredients, encapsulation complex that contains a cyclopropene compound and one or more ingredients that causes effervescence.

For another example, in some embodiments the solid material may be placed into an enclosure that contains mangoes, and water vapor in the atmosphere may be effective as a release agent. In some of such embodiments, the solid material that contains cyclopropene encapsulated complex may be in a form that also contains, optionally among other ingredients, a water-absorbing compound such as, for example, a water-absorbing polymer or a deliquescent salt.

Also contemplated are embodiments in which mangoes are brought into contact with a liquid composition that contains one or more cyclopropene compounds. Among such liquid compositions, the cyclopropene compound may be dissolved or dispersed in a liquid medium. In some embodiments involving liquid composition, a cyclopropene may be in an encapsulation complex with a molecular encapsulation agent, and the encapsulation complex may be dissolved or dispersed in a liquid medium.

In preferred embodiments of the present invention, the atmosphere containing one or more cyclopropene compounds in gaseous form is in contact with mangoes (or is in contact with a permeable surrounding device that surrounds one or more mangoes). In such embodiments, all concentrations above zero of cyclopropene compound are contemplated. Preferably, the concentration of cyclopropene compound is 0.5 ppb or higher; more preferably is 1 ppb or higher; more preferably is 10 ppb or higher; more preferably is 100 ppb or higher, more preferably is 500 ppb or higher. Preferably, the concentration of cyclopropene compound is 100 ppm or lower, more preferably 50 ppm or lower, more preferably 10 ppm or lower, more preferably 5 ppm or lower.

MAP may be active or passive. Active MAP is packaging that is attached to some material or apparatus that adds certain gas or gases to the atmosphere inside the MAP and/or removes certain gas or gases from the atmosphere inside the MAP.

Passive MAP (or commodity generated modified atmospheres) takes advantage of the fact that mangoes respire after harvest. Thus mangoes placed in an enclosure, among other processes, consume oxygen and produce carbon dioxide. The MAP can be designed so that diffusion through the solid exterior surfaces of the MAP and passage of gas through any perforations that may be present in the exterior surface of the MAP maintain optimum levels of oxygen, carbon dioxide, and optionally other gases (such as, for example, water vapor or ethylene or both). In preferred embodiments, passive MAP is used.

Also contemplated are embodiments that employ active MAP. In the specification and claims herein, if MAP is not specifically stated to be active or passive, it is intended that the MAP may be either active or passive. For example, if it is stated herein that an MAP has a certain gas transmission characteristic, both of the following embodiments are contemplated: a passive MAP that has that gas transmission characteristic; and an active MAP that, when it contains mangoes, maintains the same atmosphere within itself that would occur in a passive MAP that had that gas transmission characteristic. Also contemplated are embodiments that employ a combination of active and passive MAP. Such combinations include sequential combinations were the mangoes are contained in active MAP followed by being contained in passive MAP or the reverse and combinations where the mangoes are contained in active and passive MAP at the same time.

A useful way to characterize the MAP is the gas transmission rate of the MAP itself in relation to the amount of mangoes held in the MAP. Preferably, the rate of transmission of carbon dioxide is, in units of cubic centimeters per day per kilogram of mangoes, 1,200 or higher; more preferably 2,500 or higher; more preferably 4,000 or higher. Preferably, the rate of transmission of carbon dioxide is, in units of cubic centimeters per day per kilogram of mangoes, 120,000 or lower; more preferably 90,000 or lower; more preferably 45,000 or lower. Preferably, the rate of transmission of oxygen is, in units of cubic centimeters per day per kilogram of mangoes, 500 or higher; more preferably 1,000 or higher; more preferably 1,500 or higher. Preferably, the rate of transmission of oxygen is, in units of cubic centimeters per day per kilogram of mangoes, 100,000 or lower; or more preferably 70,000 or lower; or more preferably 35,000 or lower; or more preferably 15,000 or lower.

The Oxygen Transmission Rate or OTR for a modified atmosphere package can be calculated from the work presented in literature or measured directly. For a microperforated polymer bag the OTR due to the permeability of the film at any given time can be theoretically calculated using Fick's law of diffusion where the permeability coefficient for the polymer film can be measured using a procedure such as described in ASTM method D3985 for 02. For this same microperforated bag the OTR due to the microperforations can be calculated using a modified Fick's law of diffusion as presented by Svetlana Fishman, Mathematical Model for Perforation Effect on Oxygen and Water Vapor Dynamics in Modified-Atmosphere Packages; Svetlana Fishman, V. Rodov, S. Ben-Yehoshua; Journal of Food Science; Vol 61; No. 5; 1996, pages 956-961, and further validated by Jaime Gonzalez, 2008, and V. Ghosh, Oxygen transmission rate through micro-perforated films: measurement and model comparison; V. Ghosh, R.C. Anantheswaran; Journal of Food Process Engineering; 24; 2001; pages 113-133. The OTR at any given time is dependent on the 02 concentration driving force at that point of time. The OTR of the system can be measured by measuring the 02 partial pressure versus time and then plotting the natural log of the concentration gradient versus time as presented by V. Ghosh, 2001. This is a convenient method in cases where there are not well validated models for the OTR such as microporous systems or unique combinations of approaches such as microporous patches combined with films or microperforated films. The Carbon Dioxide Transmission Rate can likewise be calculated by this same approach.

It is useful to characterize the inherent gas transmission characteristics of a polymeric film. By "inherent" it is meant the properties of the film itself, in the absence of any perforations or other alterations. It is useful to characterize the composition of a film by characterizing the gas transmission characteristics of a film that has that composition and that is 30 micrometers thick. It is contemplated that, if a film of interest were made and tested at a thickness that was different from 30 micrometers (e.g., from 20 to 40 micrometers), it would be easy for a person of ordinary skill to accurately calculate the gas transmission characteristics of a film having the same composition and having thickness of 30 micrometers. The gas transmission rate of a film having thickness 30 micrometers is labeled "GT-30" herein.

One useful inherent characteristic of a polymeric film composition is herein called "film beta ratio," which is the ratio of the GT-30 for oxygen gas transmission rate to the GT-30 for carbon dioxide. Preferred polymeric film has film beta ratio of 1:4 or higher. By "1:4 or higher" is meant that the film beta ratio is 1:X, where X is greater than 4. More preferred MAP is made of material that has film beta ratio of 1:4.5 to 1:8.

In preferred embodiments, some, or all, of the exterior surface of the MAP is polymeric. Preferably, the polymer is in the form of a polymeric film. Some suitable polymeric films have thickness of 5 micrometer or more; or 10 micrometer or more; or 20 micrometer or more. Independently, some suitable polymeric films have thickness of 200 micrometer or less; or 100 micrometer or less; or 50 micrometer or less.

Some suitable polymer compositions include, for example, polyolefins, polyvinyls, polystyrenes, polydienes, polysiloxanes, polyamides, vinylidene chloride polymers, vinyl chloride polymers, copolymers thereof, blends thereof, and laminations thereof. Suitable polyolefins include, for example, polyethylenes, polypropylenes, copolymers thereof, blends thereof, and laminations thereof. Suitable polyethylenes include, for example, low density polyethylene, ultralow density polyethylene, linear low density polyethylene, metallocene-catalyzed polyethylene, copolymers of ethylene with polar monomers, medium density polyethylene, high density polyethylene, copolymers thereof and blends thereof. Suitable polypropylenes include, for example, polypropylene and oriented polypropylene. In some embodiments, low density polyethylene is used. In some embodiments, copolymer of styrene and butadiene is used. In some embodiments, polyamides, such as, for example, nylon, are used.

Preferred polymer compositions contain one or more polyolefin or polyamide; more preferred is polyethylene, polycaprolactam (nylon 6), or the copolymer of adipoyl chloride and hexamethylene diamine (nylon 66); more preferred is metallocene-catalyzed polyethylene or polycaprolactam. More preferred polymer compositions contain one or more polyolefin and one or more copolymer of an olefin monomer with a polar monomer. By "copolymer" herein is meant the product of copolymerizing two or more different monomers. Suitable copolymers of an olefin monomer with a polar monomer include, for example, such polymers available from DuPont called Elvaloy™ resins. Preferred are copolymers of ethylene with one or more polar monomer. Suitable polar monomers include, for example, vinyl acetate, methyl acrylate, ethyl acrylate, butyl acrylate, acrylic acid, methacrylic acid, and mixtures thereof. Preferred polar monomers contain one or more ester linkage; more preferred is vinyl acetate. Among copolymers of ethylene with one or more polar monomer, the preferred amount of polar monomer is, by weight based on the weight of the copolymer, 1 % or more; more preferably 2% or more; more preferably 3% or more. Among copolymers of ethylene with one or more polar monomer, the preferred amount of polar monomer is, by weight based on the weight of the copolymer, 18% or less; more preferably 15% or less; more preferably 12% or less; more preferably 9% or less; more preferably 7% or less.

When it is stated herein that a container comprises polymeric film, it is meant that some or all of the surface area of the container consists of polymeric film, and the film is arranged so that molecules that are capable of diffusing through the polymeric film will diffuse between the inside of the container and the outside of the container in both directions. Such a container may be constructed so that one, two, or more separate portions of the surface area of the container consist of polymeric film, and the polymeric film portions may be the same composition as each other or may be different from each other. It is contemplated that such containers will be constructed so that the portion of the container surface that is not polymeric film will effectively
block diffusion of gas molecules (i.e., the amount of gas molecules that diffuse through will be of negligible importance).

Preferred are film compositions for which the GT-30 for carbon dioxide at 23 °C, in units of cm³/(m²-day), is 800 or higher; more preferred is 4,000 or higher; more preferred is 5,000 or higher; more preferred is 10,000 or higher; more preferred is 20,000 or higher. Preferred are films with GT-30 for carbon dioxide at 23°C, in units of cm³/(m²-day), of 150,000 or lower; more preferred is 80,000 or lower; more preferred is 60,000 or lower; more preferred is 40,000 or lower. Preferred are films with GT-30 for oxygen at 23°C, in units of cm³/(m²-day), of 200 or higher; more preferred is 1,000 or higher; more preferred is 3,000 or higher. Preferred are films with GT-30 for oxygen at 23°C, in units of cm³/(m²-day), of 150,000 or lower; more preferred is 80,000 or lower; more preferred is 40,000 or lower; more preferred is 20,000 or lower; more preferred is 15,000 or lower; more preferred is 10,000. Preferred are films with GT-30 for water vapor at 37.8°C, in units of g/(m²-day), of 10 or higher; more preferred is 20 or higher. Preferred are films with GT-30 for water vapor at 37.8°C, in units of g/(m²-day), of 1,000 or lower; more preferred is 600 or lower; more preferred is 40,000 or lower.

Another useful way to characterize an MAP is the "MAP beta ratio," which is defined herein as the ratio of the rate of transmission of oxygen of the MAP itself to the rate of transmission of carbon dioxide of the MAP itself. Preferably, the MAP beta ratio is 1:1.03 or higher (i.e., 1:Y, where Y is greater than or equal to 1.03); more preferably 1: 1.05 or higher. Preferably, the MAP beta ratio is 1:5 or lower; more preferably 1:3 or lower.

The polymeric film used herein has perforations. The holes may have mean diameter of 5 micrometers to 500 micrometers. In preferred embodiments, the holes have mean diameter of 10 micrometers or more; more preferably 20 micrometers or more; more preferably 50 micrometers or more; more preferably 100 micrometers or more. Independently, in preferred embodiments, the holes have mean diameter 300 micrometers or less; more preferably 200 micrometers or less. If a hole is not circular, the diameter of the hole is considered herein to be 2 times the square root of the quotient of the area of the hole divided by pi.

The MAP comprises polymeric film that is perforated. The preferred number of holes is determined in part by the weight of mangoes that will be present in the MAP. In preferred embodiments, the number of holes per kilogram of mangoes in the MAP enclosure is 10 or more; more preferably 20 or more; more preferably 40 or more. In preferred embodiments, the number of holes per kilogram of mangoes in the MAP enclosure is 1000 or fewer; more preferably 750 or fewer, more preferably 500 or fewer; more preferably 250 or fewer.

Among embodiments in which the MAP comprises polymeric film that is perforated, the preferred total area of the holes, in units of square micrometer per kilogram of mangoes, is 50,000 or more; more preferably 100,000 or more; more preferably 150,000 or more. Among embodiments in which the MAP comprises polymeric film that is perforated, the preferred total area of the holes, in units of square micrometer per kilogram of mangoes, is 20,000,000 or less; more preferably 10,000,000 or less; more preferably 5,000,000 or less; more preferably 2,500,000 or less.

In preferred embodiments, the MAP comprises polymeric film, and the percent of the surface area of the MAP that consists of the polymeric film is 10% to 100%; more preferably 50% to 100%; more preferably 75% to 100%; more preferably 90% to 100%. An MAP in which 90% to 100% of the surface area consists of polymeric film is known herein as a "bag." Preferred are MAP that comprise polymeric film and in which all portions of the surface of the MAP that are not polymeric film effectively block diffusion of gas molecules. In embodiments in which the MAP comprises polymeric film and the remainder of the surface of the MAP effectively blocks diffusion of gas molecules, the MAP is considered to be passive MAP.

Holes in polymeric film may be made by any method. Suitable methods include, for example, laser perforation, hot needles, flame, low-energy electrical discharge, and high-energy electrical discharge. One preferred method is laser perforation. Among embodiments in which laser perforation is used, it is preferred to design or select polymeric film that is well suited to laser perforation. That is, the polymeric film is designed or selected so that the laser easily makes holes that are round and have predictable size. Preferred laser is a carbon dioxide laser. For different polymeric film compositions, the appropriate wavelength of laser light may be chosen. For polymeric films that contain polyethylene and/or copolymers of ethylene with one or more polar monomer, it is preferred to choose a carbon dioxide laser producing infrared light that includes infrared light of wavelength 10.6 micrometer.

The mangoes used in the practice of the present invention may be any members of the genus *Mangifera.* In some embodiments of the present invention edible fruits of the genus *Mangifera* are used. In some embodiments, mangoes that are members of the species *Mangifera indica* are used. In some embodiments, mangoes that are not members of the species *Mangifera indica* are used. In some embodiments, mangoes of the species *Mangifera indica,* cultivar Tommy Atkins, are used. In preferred embodiments of the present invention, mangoes are harvested when they are green, but physiologically mature.

In some embodiments, mangoes are harvested and immediately placed into MAP. In some embodiments, the time from harvest to placement into MAP is 14 days or less, more preferably 7 days or less, more preferably 2 days or less. In some embodiments, harvested mangoes are placed into MAP prior to shipment, and the harvested mangoes remain in the MAP during shipment. In some embodiments, mangoes are shipped to a destination that is near the intended point of sale to consumers. As used herein, "near the intended point of sale to consumers" means a location from which it is capable to transport the mangoes to the point of sale to consumers in 3 days or fewer by truck or other surface transportation.

In some embodiments of the present invention, mangoes are placed into an MAP after harvest and prior to shipment. In some of such embodiments, the MAP may be placed in a carrying device. The carrying device provides some structure for ease of carrying the MAP and for strength in stacking the carrying devices during transportation. Carrying devices allow free exchange of gas between the inside and the outside of the carrying device. A typical suitable carrying device is, for example, a cardboard box with large holes (for example, round holes with diameter 20 mm or greater). In some embodiments, mangoes are shipped in an MAP that is in a carrying device to a destination near the intended place of sale to consumers.

In some embodiments of the present invention, mangoes are contacted with a cyclopropene compound while they are in an MAP. In some embodiments, mangoes are contacted with an ethylene-active compound while they are in an MAP and then, while they are in that same MAP, they are subsequently contacted with a cyclopropene compound. In some embodiments, mangoes are contacted with a cyclopropene compound while they are in an MAP and then, while they are in that same MAP, they are subsequently contacted with an ethylene-active compound. In some embodiments, mangoes are contacted with a cyclopropene compound, and ethylene-active compound, or both prior to being placed in an MAP.

In preferred embodiments, mangoes are processed as follows. Mangoes are harvested at their normal commercial timing based upon fruit maturity, packed into commercial cardboard boxes, and cooled to 10°C to 15°C. The fruit are then transferred to MAP bags and returned to the boxes. The boxes are then exposed to 1-MCP. After the 1-MCP treatments, the fruits are shipped. In another preferred embodiment, mangoes are packed into MAP bags at harvest and the bags are then placed into cardboard boxes, cooled, treated with 1-MCP, and shipped.

In one preferred embodiment of the present invention, mangoes are exposed to the cyclopropene compound after being placed in the MAP. In another preferred embodiment, mangoes are exposed to the cyclopropene compound before being placed in the MAP. Subsequent to exposure to the cyclopropene compound, the mangoes are kept in an MAP for a time period that is herein called TP1. TP1 includes at least a time interval that is herein called TI1. TI1 is a continuous time interval with duration of 1 hour. That is, the mangoes are definitely kept in an MAP for a continuous time interval that lasts 1 hour (TI1). The time interval TI1 is part of a time period TP1. TP1 may be the same as TI1 or that may be larger than TI1. If TP1 is larger than TI1, it may be larger by a small amount or a large amount; TP1 may be larger than TI1 by one or more hours, one or more days, or one or more weeks. The time period TP1 may begin prior to TI1, or TP1 may continue after the end of TI1, or both.

When it is stated herein that mangoes are kept in an MAP for time interval TI1, it is meant that, if the mangoes are already in an MAP at the beginning of TI1, the mangoes remain in the MAP throughout TI1. It is also meant that, if the mangoes are not in an MAP at the beginning of TI1, the mangoes are placed into an MAP at the beginning of TI1 and remain therein throughout TI1.

In preferred embodiments of the present invention, mangoes are kept in an MAP during time interval TI1. TI1 may begin before or after exposing mangoes to a cyclopropene compound. TI1 may begin immediately after the conclusion of exposing mangoes to a cyclopropene compound, or TI1 may begin at any time thereafter, up to 72 hours after the conclusion of exposing the mangoes to a cyclopropene compound.

By "conclusion of exposing the mangoes to a cyclopropene compound," it is meant herein a time after which mangoes have been exposed to a cyclopropene compound as described herein and at which the concentration of cyclopropene compound in the atmosphere around the mangoes (or the atmosphere around the permeable surrounding device, if the mangoes were in a permeable surrounding device during exposure to cyclopropene compound) falls below 0.5 ppb.

In preferred embodiments, the interval between the conclusion of exposing mangoes to a cyclopropene compound and the start of TI1 is 48 hours or less; more preferably 36 hours or less; more preferably 24 hours or less; more preferably 12 hours or less; more preferably 6 hours or less; more preferably 3 hours or less; more preferably 1 hour or less. Unless explicitly stated otherwise, embodiments described herein with statements that TI1 starts a certain number hours or less after conclusion of exposing mangoes to a cyclopropene compound include embodiments in which mangoes are in an MAP during exposure to a cyclopropene compound and remain in the MAP for at least the time interval TI1.

In preferred embodiments, TP1 extends 11 or more hours beyond the end of TI1. That is, mangoes remain in an MAP throughout TI1 and then remain in the MAP for an additional 11 hours or more. In more preferred embodiments, TP1 extends beyond the end of TI1 by 23 hours or more; more preferably by 47 hours or more; more preferably by 71 hours or more. In some preferred embodiment, TP1 extends through shipping of the mangoes to the retail consumer.

In some embodiments (herein called "post-CP" embodiments), mangoes are not in MAP during exposure to the cyclopropene compound. In other embodiments (herein called "pre-CP" embodiments), mangoes are in MAP during exposure to the cyclopropene compound. It is contemplated that any post-CP embodiment may be combined with any of the preferred embodiments described herein. It is also contemplated that, independently, any pre-CP embodiment may be combined with any of the preferred embodiments described herein.

Among post-CP embodiments, prior to exposure to a cyclopropene compound, mangoes may be placed in any type of container (e.g., any bag, box, enclosure, carrier, or combination thereof), including, for example, containers that are not MAP and/or containers that are MAP. Containers include shipping containers and sea containers. In preferred post-CP embodiments, the time from the conclusion of exposure to the cyclopropene compound to the placement of mangoes into MAP is 12 hours or less; more preferably 8 hours or less; more preferably 4 hours or less. In preferred post-CP embodiments, the time from the conclusion of exposure to the cyclopropene compound to the removal of mangoes from MAP is 24 hours or more; more preferably 48 hours or more; more preferably 72 hours or more.

In preferred post-CP embodiments, mangoes are placed into MAP immediately after conclusion of the exposure to the cyclopropene compound.

Among pre-CP embodiments, mangoes may be placed into MAP at any time prior the beginning of exposure to the cyclopropene compound. Mangoes may be placed into an MAP and removed and then re-placed into an MAP prior to the beginning of exposure to the cyclopropene compound. In preferred pre-CP embodiments, mangoes are placed into an MAP and then remain in that MAP at least throughout exposure to a cyclopropene and throughout TI1. In some pre-CP embodiments incorporating optional treatment with ethylene, mangoes are placed into an MAP prior to exposure to ethylene, and then the mangoes remain in that MAP at least throughout exposure to the cyclopropene and throughout TI1. In some pre-CP embodiments, mangoes are placed into an MAP at a moment that is either immediately after harvest or is within 2 days after harvest, and then the mangoes remain in that MAP at least throughout exposure to the cyclopropene and throughout TI1

It is contemplated that preferred MAP is chosen or designed so that, when mangoes are placed into the MAP and the MAP, with the mangoes inside, is then optionally exposed to an ethylene-active compound and exposed to the cyclopropene compound, and then stored for shipment, a certain preferred atmosphere will be present in the MAP. In that preferred atmosphere, the amount of carbon dioxide, by volume based on the volume of the atmosphere inside the MAP, is 4.5% or more; more preferably 8% or more. In that preferred atmosphere, the amount of carbon dioxide, by volume based on the volume of the atmosphere inside the MAP, is 21% or less; more preferably 19% or less. In that preferred atmosphere, the amount of oxygen, by volume based on the volume of the atmosphere inside the MAP, is 5% or more; more preferably 8% or more. In that preferred atmosphere, the amount of oxygen, by volume based on the volume of the atmosphere inside the MAP, is 13% or less; more preferably 12.5% or less.

### EXAMPLES

Mangoes were evaluated for peel and pulp firmness, which are commercial measures of mango quality, using the following test procedure:
- Determination of peel resistant to penetration (peel firmness) was accomplished using a Chatillon penetrometer (model DPPH-100) equipped with a chisel tip (6mm wide).
- Readings were obtained choosing randomly six fruit from each treatment. Each fruit was placed by the side on the penetrometer and then the tip of the instrument (chisel) was stalled into the fruit (about 8mm deep). Six fruits per treatment were selected and readings were used for obtaining the average value of peel firmness for each treatment.
- For testing flesh firmness, the other side of the fruit selected for testing peel resistant to penetration was used. The side not tested for peel resistance to penetration was peeled using a standard fruit peeler (which removed approximately a 2 mm thick peel tissue section). The total area peeled was approximately five square centimeters.
- Immediately after removing the peel, each fruit was placed on the penetrometer and a new value of firmness was obtained using the chisel tip (to a depth of about 8mm). Average values were calculated using six fruits per treatment.

Two different MAP bags were used in the following Examples. The first bag, designated "B bag" was made by producing film, then perforating that film, then making bags from the perforated film. The film components were the following:
EVA1 = ELVAX™ 3124 resin (DuPont Co.), Ethylene/Vinyl Acetate resin with 9% vinyl acetate by weight, based on the weight of the EVA, with melt index (ASTM D1238 190°C / 2.16 kg) of 7 g/10 minute.
m-LLDPE = EXCEED™ 1018 resin (Exxon-Mobil Co.), metallocene Linear Low Density Polyethylene with a melt index (ASTM D1238, 190°C/2.16 kg) of 1.0 g/10 minutes and with density (ASTM D792) of 0.918 g/cm³.
Slip A = diatomaceous earth (15% by weight based on the weight of Slip A) in polyethylene.
Slip B = stearamide (10% by weight based on the weight of Slip B) in ethylene/vinyl acetate copolymer.
Slip-AB = Mixture of Slip A and Slip B, with weight ratio of Slip A to Slip B of 3.0 to 2.5.
ELITE™ 5400G = Enhanced Polyethylene resin (metallocene polyethylene) available from The Dow Chemical Company with a melt index (ASTM D1238 190 C/2.16 kg) of 1.0 g/10 minutes, a density (ASTM D792) of 0.916 g/cm3 ;
CN 734 = an antiblock containing masterbatch available from several different vendors with targeted amount of 15% diatomaceous earth by weight in 85% polyethylene.
CN 706 = a stearamide (slip) containing masterbatch available from several different vendors with targeted amount of 10% by weight in 90% ethylene vinyl acetate co-polymer.
ELVAX 3170 = ethylene-vinyl acetate copolymer available from Dupont Polymers with a melt index (ASTM D1238 190 C/2.16 kg) of 2.5 g/10 minutes and 18 wt% vinyl acetate.
10090 = masterbatch available from Ampacet which contains 5% slip in an 8 MI LDPE base resin
10063 = masterbatch also available from Ampacet which contains 20% diatomaceous earth in an 8 MI LDPE base resin.

The film was a three-layer coextrudate that was blown to produce film of thickness 29.5 micrometer (1.16 mil). The volume ratio of the layers was this:
first layer / second layer / third layer = 30/40/30.
Each layer was a blend of EVA, m-LLDPE, and, optionally, Slip-AB. The weight ratios were as follows:
first layer: EVA1/m-LLDPE/Slip-AB = 46/52/2
second layer: EVA1/m-LLDPE/Slip-AB = 46/54/0
third layer: EVAl/m-LLDPE/Slip-AB = 46/50/4

The film was perforated using a laser to give average hole diameter of 105 micrometer. Film was folded to form rectangles of 48 cm by 30 cm (18.75 inch by 12 inch) and sealed on three sides to form bags. Each bag had 88 holes.

Details of the preparation of the B bags were as follows. Film was produced at The Dow Chemical Company in Findlay, Ohio on a 3 layer co-extrusion blown film line. Layer 1 was the inside of the film roll and consisted of 20% of the total film, the core layer (Layer 2) located between the inner layer and outer layer consisted of 60% of the total film and the outer layer (Layer 3) consisted of 20% of the total film structure. Each layer consisted of a blend of the various components as given in the table below. Edge reclaim was added to the core layer at no more than 20% of the total feed to this extruder. The outer layer was treated by corona discharge to a targeted 42 dyne level. Film formulations for the film used in making the D bags were as follows:

| **Layer** | **Extruder** | **Layer Ratio** (vol%) | **Component Name** | **Layer Comp.** (wt%) |
|---|---|---|---|---|
| 1 | Inner | 20 | ELITE™ 5400G | 50.0 |
| | | | ELVAX® 3124 | 44.5 |
| | | | CN 734 | 3.0 |
| | | | CN 706 | 2.5 |
| 2 | Core | 60 | ELITE™ 5400G | 54 |
| | | | ELVAX® 3124 | 46 |
| 3 | Outer | 20 | ELITE™ 5400G | 50.0 |
| | | | ELVAX® 3124 | 44.5 |
| | | | CN 734 | 3.0 |
| | | | CN 706 | 2.5 |

Process conditions for making the film used for the B bags were as follows:

| | |
|---|---|
| Target Gauge, micrometers (Mils) | 29.2 (1.15) |

| Inner Extruder Temperatures | |
|---|---|
| Zone # 1-4, °C (°F) | 149-193 (300-380) |
| Melt Temp, °C (°F) | 212 (414) |

| Core Extruder Temperatures | |
|---|---|
| Zone # 1-6, °C (°F) | 149-193 (300-380) |
| Melt Temp, °C (°F) | 222 (431) |

| Outer Extruder Temperatures | |
|---|---|
| Zone # 1-6, °C (°F) | 149-193 (300-380) |
| Melt Temp, °C (°F) | 216 (421) |
| Die Temperatures °C (°F) | 193 80) |

Properties of the film used in making the B bags were as follows:

| Test | Method⁽²⁾ | Results |
|---|---|---|
| Thickness micrometer (mil) | ASTM D374 | 29.5 (1.16) |
| Haze, % | ASTM D1003 | 11.7 |
| Clarity, % | ASTM D1746 | 88.1 |
| 1% Secant Modulus, MD, MPa (psi) | ASTM D882 | 129.4 (18,760) |
| 1% Secant Modulus, TD, MPa (psi) | ASTM D882 | 164.2 (23,820) |
| Tensile Toughness, MD, MPa (psi) | ASTM D882 | 87.7 (12,720) |
| Tensile Toughness, TD, MPa (psi) | ASTM D882 | 86.0 (12,470) |
| Elmendorf Tear, MD, g/micrometer (g/mil) | ASTM D1922 | 3.07 (78) |
| Elmendorf Tear, TD, g/micrometer (g/mil) | ASTM D1922 | 22.1 (562) |
| carbon dioxide transmission at 100% MOCON PERMATRAN-C™ 4/41 23°C cm³/(m²-day) | ASTM F2476 | 41,400 |
| oxygen transmission at 100% MOCON OX-TRAN 23.1°C cm³/(m²-day) | ASTM D3985 | 8,550 |
| water transmission rate MOCON PERMATRAN-W WVTR 37.8°C ambient g/(m²-day) | ASTM D1249 | 29.4 |

| | | |
|---|---|---|
| Note (2): ASTM methods are published by the American Society for Testing and Materials, West Conshohocken, PA, USA. | | |

The film was drilled with a beam compression laser processing system, and the resulting holes had a machine direction average size of 109 microns and a transverse direction average size of 104 microns. These films were formed into 48 cm by 30 cm (18.75 inch by 12 inch) bags.

The second bag, designated "M bag" was made from nylon 6/66 (Kenylon™ 6250, available from FMpkg, Waterford, CT 06385, USA) which was extruded in 67.5 cm (27") wide tube format with film thickness of 17.8 micrometers (0.7 mil) with a bag thickness was 35.6 micrometer (1.4 mil). The tubes were eye spot printed, perforated and then manually converted to bags by heat sealing at bottom side with a heat seal bar. The final bag size was 67.5 cm (27") wide and 70 cm (28") long. Each bag had 4 lanes of perforations; the distance between perforations on any give lane was 0.5 cm (0.2"). The perforation size was 110 to 120 microns. There were approximately 560 perforations per bag.

### Example 1: Mango preservation utilizing MAP and 1-MCP combination

**Fruit Requirement:** The total Fruit Requirement for the test was 1300 individual fruit (650 Tommy Atkins and 650 Irwin cultivars).

**Fruit Harvesting, and postharvest handling at the packinghouse:**
Fruit was harvested from a commercial mango farm (Mango Rica S.A.) located in Liberia, Guanacaste. Costa Rica on April 7, 2011. All fruit was harvested according to commercial standards for European markets. All fruit was subject to the standard practices for handling and packing for European markets (reception, selection, washing, waxing, fungicide application, and packaging). Fruit was precooled to 12 to 15° C after been packed into commercial 4Kg-cardboard boxes for mangoes.

**Fruit Transportation to Holding Room:** After precooling the fruit (packaged in commercial cardboard boxes) it was immediately transported in a refrigerated truck (10 to 15° C) to the Postharvest Technology Laboratory of the University of Costa Rica located in San Pedro Montes de Oca, San Jose. Costa Rica. Upon arrival fruit was stored at 10-12° C for six hours waiting for repacking it into MAP bags and exposure to 1-MCP.

**Repacking fruit in MAP bags and exposure of some fruit to 1-MCP before transport simulation:** One day after harvest 432 fruit from each mango cultivar were repacked using MAP bags. Two types of MAP bags identified as 1)"M Bag" and 2) "B Bag" were tested with both mango cultivars (Tommy Atkins and Irwin). Six fruit of the same mango cultivar were placed inside of each individual MAP bag. This procedure yielded 36 B Bag and 36 M Bag filled with fruit from one particular cultivar (a total of 72 MAP bags of Tommy Atkins and 72 MAP bags of Irwin). All MAP bags were sealed by twisting the open-side of the bag and fold-down the twisted-end. Then, a rubber-band was used around the twisted and folded down end of the bag. After sealing the open side of the bag the bag with the fruit inside was placed with great care inside of the 4 Kg cardboard boxes used originally to pack the fruit at the packinghouse. Fruit from each cultivar (216) remained inside of commercial 4 Kg-cardboard boxes to facilitate comparison of MAP fruit with fruit handled using standard commercial practices. No bags were used with this set of fruit as this is the standard practice under commercial handling of mangoes for European markets exported out of Costa Rica. Once all fruit was distributed into either: 1) commercial packaging system (only cardboard box), 2) B Bag + cardboard box, and 3) M Bag + cardboard box there were twelve-randomly selected M Bag and twelve-randomly selected B Bag from each cultivar grouped for exposure to 1-MCP before transport simulation to market. A group of 72 fruit packaged only in commercial cardboard boxes were randomly chosen for exposure to 1-MCP, as well. All fruit selected for exposure to 1-MCP prior to transport simulation was placed inside of experimental tents used for exposure of fruit to 1-MCP. After releasing 500 ppb of 1-MCP generated from SmartFresh™ 1-MCP (available from AgroFresh Inc., Philadelphia, PA 19106-2399, USA), the tents were sealed for 12 hours at room temperature (21 to 25° C). While some of the fruit from each cultivar was exposed to 1-MCP the rest of the fruit remained stored at 10° C. After exposure of fruit to 1-MCP the fruit was subject to ventilation for one hour to remove any excess of 1-MCP from the fruit or the packaging material (no bag was opened during this process). The fruit was then placed in a different holding room at 10° C, to reduce the accidental exposure of fruit to 1-MCP.

**Transport simulation:** To simulate commercial transit and allow fruit to show effect of commercial handling, the fruit was held at 10-12°C for 18 days. This was to simulate transport to European markets by ship. Relative humidity was between 85 to 90% during the transport simulation.

**Induction of fruit to ripen:** Immediately after ending the transport simulation, the temperature of all holding rooms was set to 18 °C. This was conducted to encourage ripening of the fruit in a natural situation without induction of ripening with ethylene. Six fruit from each cultivar randomly selected were used for assessing firmness. In addition, twelve-randomly selected M Bag and twelve-randomly selected B Bag fruits from each cultivar were selected from the main group of fruit not exposed previously to 1-MCP. A group of 72 fruit packaged only in commercial cardboard boxes were randomly chosen as well. This fruit was exposed for 24 hours to ethylene with an ethylene burner. The room was kept at 18 - 20°C as in the case of fruit aimed to ripening (in a different holding room) without exposure to ethylene. After 24 hours of exposure to ethylene the holding room and the fruit inside was ventilated for one hour to remove any excess ethylene.

**Exposure of some fruit to 1-MCP after transport simulation:** Twelve-randomly selected M Bag and twelve-randomly selected B Bag fruits from each cultivar were grouped for exposure to 1-MCP after transport simulation to market. A group of 72 fruit packaged only in commercial cardboard boxes were randomly chosen for exposure to 1-MCP, as well. All fruit selected for exposure to 1-MCP after transport simulation was placed inside of experimental tents used for exposure of fruit to 1-MCP. After realizing 500 ppb of 1-MCP, the tents were sealed for 12 hours at room temperature (21 to 25° C). While some of the fruit from each cultivar was exposed to 1-MCP the rest of the fruit remained stored at 18-20° C. After exposure of fruit to 1-MCP the fruit was subject to ventilation for one hour to remove any excess of 1-MCP from the fruit or the packaging material (no bag was opened during this process). After removing any traces of 1-MCP the fruit was placed in a different holding room at 18-20° C. This action was intended for reducing the accidental exposure of fruit to 1-MCP.

Pulp firmness is a commercially important measure of mango quality. The pulp firmness results from this Experiment for the Tommy Adkins cultivar with MCP exposure prior to transport simulation are as follows:
Results for Tommy Adkins Cultivar

### (Test utilized 6 mangoes per bag, total weight of 2.7-3.0 Kg/bag)

| Mango Pulp Firmness Difference | |
|---|---|
| (Reported as change from control*) | |
| | Lbs. |
| MCP Alone | -0.03 |
| B bag Alone | -5.61 |
| MCP + B bag | 15.72 |
| M bag Alone | -3.0 |
| MCP + M bag | 11.89 |

The results for the Irwin cultivar and for exposure after transport simulation were inconclusive. Such results are not unanticipated because of differences in the respiration rate, O₂, CO₂, and moisture requirements for optimum ripening among the various mango cultivars.

The above results show that treatment of mangoes with MCP alone did not improve the quality of the mangoes based on pulp firmness. The results also show that MAP alone is actually detrimental to mango quality. However, the use of MAP and MCP in combination clearly provides an unexpected improvement in mango quality.

Based on the results of these experiments, we conclude that by modifying the CO₂, O₂, and moisture permeability of the MAP bags and the dose and duration of exposure to MCP, results similar to the above would be observed for mango cultivars other than Tommy Adkins. Such modifications would be accomplished easily.

### Example 2: Effect of 1-MCP concentration on mango preservation after transport

This experiment utilized a modified version of the "B bag". Rather than three layers, the bag consisted of two extruded layers in an 80/20 ratio with the following composition:

| Extruder | Layer Ratio (vol %) | Component Name | Layer Composition (wt%) |
|---|---|---|---|
| Primary | 80 | ELITE™ 5400G | 54 |
| | | ELVAX™ 3130 resin | 42 |
| | | CN 4420 | 4 |
| Secondary | 20 | ELITE™ 5400G | 52 |
| | | ELVAX™ 3130 | 42 |
| | | CN 4420 | 4 |
| | | 10562 | 2 |

ELVAX™ 3130 resin is similar to ELVAX™ 3124 resin except containing 12% VA. CN-4420 is a dual slip available from several different vendors which contains 4% Erucamide/4% stearamide/20%AB in 18% VA EVA (1600 ppm each slip 8000 ppm AB). 10562, available from Ampocet, contains 3% Viton® A process aid in PE (600 ppm).

The film was perforated using a laser to give an average hole diameter of 104 micrometers with 52 perforations per bag in four rows. The OTR of the bag was ca. 370 cc/hour.

Mangos, Tommy Atkins variety imported from Guatemala, were kept at a temperature of 10°C for three days. Portions of the mangos were subjected to one of eight different treatments; control (no 1-MCP or bag), 1-MCP only at 500 ppb, bag only, and bag plus one of five different 1-MCP application rates (50, 100, 500, 1000, and 2500 ppb). Each mango weighed ca. 1.1 Kg. For those mangos placed in bags, the bag contained four fruits for a total of 4.4 Kg of fruit per bag. The 1-MCP applications were made at a temperature of 10°C for 15 hours. The control and each treated sample were then kept at room temperature (ca. 22°C) for three days to simulate shelf-storage. Bags were kept closed during the shelf-storage simulation. Pulp firmness was then determined with the following results:

| Treatment | 1-MCP | Bag | Pulp Firmness Difference from Control (Lb.) |
|---|---|---|---|
| 1 | 500 ppb | No | 0.43 |
| 2 | None | Yes | 1.53 |
| 3 | 50 ppb | Yes | 2.00 |
| 4 | 100 ppb | Yes | 2.70 |
| 5 | 500 ppb | Yes | 3.35 |
| 6 | 1000 ppb | Yes | 2.60 |
| 7 | 2500 ppb | Yes | 3.29 |

These data clearly demonstrate that the combination of 1-MCP treatment in combination with an MAP bag results in an unexpected increase in the pulp firmness of mangos compared to the expected additive effect of the 1-MCP treatment and MAP bag alone (which, in this experiment would be expected to be 1.96 lb).

## Claims

1. A method of handling mangoes, comprising:
exposing the mangoes to an atmosphere that contains one or more cyclopropene compounds; and
containing the mangoes in a modified-atmosphere package,
wherein the modified atmosphere package comprises a polymeric film that is perforated.

2. The method of claim 1, wherein the mangoes are the Tommy Atkins cultivar.

3. The method of claim 1, wherein the modified atmosphere package comprises a total area of the perforations in the polymer film of 50,000 to 6,000,000 square micrometer per kilogram of mangoes.

4. The method of claim 1, wherein the rate of transmission of carbon dioxide through the modified atmosphere package is from 1,200 to 120,000 cubic centimeters per day per kilogram of mangoes.

5. The method of claim 1, wherein the rate of transmission of oxygen through the modified atmosphere package is from 500 to 100,000 cubic centimeters per day per kilogram of mangoes.

6. The method of claim 1, wherein the cyclopropene compound is 1-methylcyclopropene.

7. The method of claim 1, wherein the modified-atmosphere package comprises a nylon 6 resin or a nylon 66 resin.

8. The method of claim 1, wherein the mangoes are harvested when they are green, but physiologically mature.

9. The method of claim 1, wherein the modified-atmosphere package comprises at least one of ethylene/vinyl acetate resin and a metallocene-catalyzed polyethylene resin.

10. The method of claim 1, further comprising packing the mangoes into commercial cardboard boxes, cooling the mangoes at a temperature range of 10°C to 15°C, transferring them to MAP bags and returning them to the boxes prior to exposing the mangoes to one or more cyclopropene compounds, wherein the one or more cyclopropene compounds is 1-MCP.

11. The method of claim 1, wherein the mangoes are exposed to one or more cyclopropene compounds while being contained in a modified-atmosphere package.

12. The method of claim 1, wherein after the conclusion of exposing the mangoes to the one or more cyclopropene compounds, the mangoes are contained in the modified-atmosphere package for at least one continuous hour.

13. The method of claim 1, further comprising:
exposing the mangoes to an atmosphere that contains one or more ethylene-active compounds prior to exposing the mangoes to the atmosphere that contains one or more cyclopropene compounds.

14. The method of claim 1, further comprising:
exposing the mangoes to the atmosphere that contains one or more cyclopropene compounds after exposing the mangoes to the atmosphere that contains one or more ethylene-active compounds.

15. The method of claim 13, wherein exposing the mangoes to the atmosphere that contains one or more cyclopropene compounds is conducted in the modified-atmosphere package and before exposing the mangoes to the atmosphere that contains one or more ethylene-active compounds, or
wherein exposing the mangoes to the atmosphere that contains one or more ethylene-active compounds is conducted in the modified-atmosphere package and before exposing the mangoes to the atmosphere that contains one or more cyclopropene compounds.

## Patentansprüche

1. Verfahren zum Handhaben von Mangos, das Folgendes umfasst:
Aussetzen der Mangos an eine Atmosphäre, die eine oder mehrere Cyclopropenverbindungen enthält; und
Aufbewahren der Mangos in einer Schutzgasverpackung,
wobei die Schutzgasverpackung einen Polymerfilm umfasst, der perforiert ist.

2. Verfahren nach Anspruch 1, wobei die Mangos das Cultivar Tommy Atkins sind.

3. Verfahren nach Anspruch 1, wobei die Schutzgasverpackung eine Gesamtfläche der Perforierungen in dem Polymerfilm von 50.000 bis 6.000.000 µm² pro Kilogramm Mangos umfasst.

4. Verfahren nach Anspruch 1, wobei die Übertragungsgeschwindigkeit von Kohlenstoffdioxid durch die Schutzgasverpackung 1.200 bis 120.000 cm³ pro Tag pro Kilogramm Mangos beträgt.

5. Verfahren nach Anspruch 1, wobei die Übertragungsgeschwindigkeit von Sauerstoff durch die Schutzgasverpackung 500 bis 100.000 cm³ pro Tag pro Kilogramm Mangos beträgt.

6. Verfahren nach Anspruch 1, wobei die Cyclopropenverbindung 1-Methylcyclopropen ist.

7. Verfahren nach Anspruch 1, wobei die Schutzgasverpackung ein Nylon-6-Harz oder ein Nylon-66-Harz umfasst.

8. Verfahren nach Anspruch 1, wobei die Mangos geerntet werden, wenn sie grün, aber physiologisch reif sind.

9. Verfahren nach Anspruch 1, wobei die Schutzgasverpackung mindestens eines von Ethylen-/Vinylacetatharz und einem metallocenkatalysierten Polyethylenharz umfasst.

10. Verfahren nach Anspruch 1, das ferner Folgendes umfasst: Verpacken der Mangos in handelsübliche Kartons, Abkühlen der Mangos in einem Temperaturbereich von 10 °C bis 15 °C, Übertragen der Mangos in Schutzgasbeutel und Rückführen der Mangos in die Kisten vor einem Aussetzen der Mangos an eine oder mehrere Cyclopropenverbindungen, wobei die eine oder mehreren Cyclopropenverbindungen 1-MCP sind.

11. Verfahren nach Anspruch 1, wobei die Mangos einer oder mehreren Cyclopropenverbindungen ausgesetzt sind, während sie in einer Schutzgasverpackung aufbewahrt werden.

12. Verfahren nach Anspruch 1, wobei nach der Beendigung des Aussetzens der Mangos an die eine oder die mehreren Cyclopropenverbindungen die Mangos für mindestens eine ununterbrochene Stunde in der Schutzgasverpackung aufbewahrt werden.

13. Verfahren nach Anspruch 1, das ferner Folgendes umfasst:
Aussetzen der Mangos an eine Atmosphäre, die eine oder mehrere ethylenaktive Verbindungen enthält, vor dem Aussetzen der Mangos an die Atmosphäre, die eine oder mehrere Cyclopropenverbindungen enthält.

14. Verfahren nach Anspruch 1, das ferner Folgendes umfasst:
Aussetzen der Mangos an die Atmosphäre, die eine oder mehrere Cyclopropenverbindungen enthält, nach dem Aussetzen der Mangos an die Atmosphäre, die eine oder mehrere ethylenaktive Verbindungen enthält.

15. Verfahren nach Anspruch 13, wobei das Aussetzen der Mangos an die Atmosphäre, die eine oder mehrere Cyclopropenverbindungen enthält, in der Schutzgasverpackung und vor dem Aussetzen der Mangos an die Atmosphäre, die eine oder mehrere ethylenaktive Verbindungen enthält, durchgeführt wird oder
wobei das Aussetzen der Mangos an die Atmosphäre, die eine oder mehrere ethylenaktive Verbindungen enthält, in der Schutzgasverpackung und vor dem Aussetzen der Mangos an die Atmosphäre, die eine oder mehrere Cyclopropenverbindungen enthält, durchgeführt wird.

## Revendications

1. Procédé de manipulation de mangues, comprenant :
l'exposition des mangues à un atmosphère qui contient un ou plusieurs composés de cyclopropène ; et
le confinement des mangues dans un emballage à atmosphère modifiée, ledit emballage à atmosphère modifiée comprenant un film polymère qui est perforé.

2. Procédé selon la revendication 1, lesdites mangues étant le cultivar Tommy Atkins.

3. Procédé selon la revendication 1, ledit emballage à atmosphère modifiée comprenant une superficie totale des perforations dans le film de polymère allant de 50 000 à 6 000 000 micromètres carrés par kilogramme de mangues.

4. Procédé selon la revendication 1, ledit rapport d'émission de dioxyde de carbone à travers l'emballage à atmosphère modifiée étant de 1 200 à 120 000 centimètres cubes par jour et par kilogramme de mangues.

5. Procédé selon la revendication 1, ledit rapport d'émission d'oxygène à travers l'emballage à atmosphère modifiée étant de 500 à 100 000 centimètres cubes par jour et par kilogramme de mangues.

6. Procédé selon la revendication 1, ledit composé de cyclopropène étant le 1-méthylcyclopropène.

7. Procédé selon la revendication 1, ledit emballage à atmosphère modifiée comprenant une résine de nylon 6 ou une résine de nylon 66.

8. Procédé selon la revendication 1, lesdites mangues étant récoltées lorsqu'elles sont vertes, mais physiologiquement matures.

9. Procédé selon la revendication 1, ledit emballage à atmosphère modifiée comprenant au moins l'une d'une résine d'éthylène-acétate de vinyle et d'une résine de polyéthylène catalysé par un métallocène.

10. Procédé selon la revendication 1, comprenant en outre l'emballage des mangues dans des boîtes en carton commerciales, le refroidissement des mangues à une plage de température allant de 10°C à 15°C, leur transfert dans des sacs d'emballage à atmosphère modifiée (MAP) et leur retour dans les boîtes avant l'exposition des mangues à un ou plusieurs composés de cyclopropène, ledit ou lesdits composés de cyclopropène étant le 1-méthylcyclopropène (1-MCP).

11. Procédé selon la revendication 1, lesdites mangues étant exposées à un ou plusieurs composés de cyclopropène tout en étant contenue dans un emballage à atmosphère modifiée.

12. Procédé selon la revendication 1, une fois l'exposition des mangues au ou aux composés de cyclopropène terminée, lesdites mangues étant contenues dans l'emballage à atmosphère modifiée pendant au moins une heure continue.

13. Procédé selon la revendication 1, comprenant en outre :
l'exposition des mangues à une atmosphère qui contient un ou plusieurs composés d'éthylène actif avant l'exposition des mangues à l'atmosphère qui contient un ou plusieurs composés de cyclopropène.

14. Procédé selon la revendication 1, comprenant en outre :
l'exposition des mangues à l'atmosphère qui contient un ou plusieurs composés de cyclopropène après l'exposition des mangues à l'atmosphère qui contient un ou plusieurs composés d'éthylène actif.

15. Procédé selon la revendication 13, ladite exposition des mangues à l'atmosphère qui contient un ou plusieurs composés de cyclopropène se déroulant dans l'emballage à atmosphère modifiée et avant l'exposition des mangues à l'atmosphère qui contient un ou plusieurs composés d'éthylène actif, ou ladite exposition des mangues à l'atmosphère qui contient un ou plusieurs composés d'éthylène actif se déroulant dans l'emballage à atmosphère modifiée et avant l'exposition des mangues à l'atmosphère qui contient un ou plusieurs composés de cyclopropène.
